# EUROPEAN PATENT SPECIFICATION

(11) **EP 3 726 645 B1**
(45) Date of publication and mention of the grant of the patent: **23.11.2022**
(21) Application number: 20163790.7
(22) Date of filing: 18.03.2020
(51) Int. Cl.: H01P 11/00, B25J 11/00, B25J 9/16, B23P 19/06

(54) **A CONFIGURABLE AUTOMATIC TEST INFRASTRUCTURE**
KONFIGURIERBARE AUTOMATISCHE TESTINFRASTRUKTUR
INFRASTRUCTURE DE TEST AUTOMATIQUE CONFIGURABLE

(30) Priority: 18.04.2019 TR 201905770
(43) Date of publication of application: 21.10.2020
(73) Proprietor: Aselsan Elektronik Sanayi ve Ticaret Anonim Sirketi, 06370 Ankara (TR)
(72) Inventor: ZORALIOGLU, MUSTAFA KEMAL, 06200 Ankara (TR)
(74) Representative: Yamankaradeniz, Kemal

(56) References cited:
- CN-A- 109 193 086
- CN-B- 105 945 561
- KR-A- 20050 096 709
- US-A1- 2017 098 878

## Description

### Technical Field

The invention is related to a configurable automatic test infrastructure where the characterization adjustment in the radio frequency (RF) and microwave filters are performed full automatically without human intervention.

The invention is particularly related to a configurable automatic test infrastructure which enables performing characterization adjustment without requiring preliminary (apparatus assembly, screw connection tip arrangement etc.) processes of the filters.

### State of the Art

Today, RF filters allow the passage of the frequencies of the RF signal within a predetermined range while they suppress the remaining signals, by means of their specific designs. These filters can not only be used not only as a module in a mechanical body but also be used at a higher level by mounting on a card.

Adjustment process step is required in many filters after production thereof. This adjustment is called characterization. It is determined whether the characterization is proper or not by means of measuring RF signals in the RF connectors where the filter is attached.

Characterization is performed by means of torqueing and/or rotating the screws which are the mechanical interfaces on the filter in order to give it its characteristic. After the torqueing/rotating process, measurements are made and characteristic control is performed from RF connectors regarding the filter inlet and outlet. If appropriate, the filter characterization process is completed, if not, the relevant operation is repeated with the relevant screws. This filter adjustment process is performed between half an hour and six hours by the operator and the characterization process is required to be performed by an operator with high hand precision and ability.

As a result of the research made on the subject, documents No US7586383 and US9716482 are seen. In the methods disclosed in these applications, there is a 3 axis moving structure in the form of a router for filter adjustment, and filter adjustment software which works in cooperation with this structure. It performs the adjustment process by tightening-loosening process by approaching the nut or screws with the movable mechanism, then terminates or repeats the processes based on the answers from the software.

In our application No TR2019/01797, a configurable automatic test infrastructure where the characterization adjustment is performed full automatically without human intervention with the mechanical interface thereon is disclosed. However, it is required to use additional apparatus in order to rotate the adjusting screws.

The application numbered CN109193086A describes an automatic filter tuning device and method that manipulating the adjusting screw. Applications numbered KR20050096709A and US2017098878A1 define an automatic RF filter tuning system and a method for manufacturing a filter using the same are disclosed. An RF filter tuning system for tuning an RF filter that includes a plurality of cavities having resonance elements and a cover having tuning areas that are positioned correspondingly to the resonance elements, includes a measuring unit configured to measure resonance characteristics of the cavity of the RF filter, a control unit configured to calculate a tuning value of the RF filter based on the resonance characteristics, and a tuning unit configured to tune the RF filter based on the tuning value calculated by the control unit. The tuning unit includes a striking unit configured to strike the tuning area of the cover of the RF filter, thereby adjusting the resonance value and tuning the RF filter.

The application numbered CN105945561B relates to a mechanical arm that connected with a screw manipulator to adjust its position according to images gathered by a vision system. The vision system identifies the position and attitude of the screw which needs to be hexagonal.

The disadvantages of the filter adjustment systems mentioned in the state of the art and applications are as follows:
- In case the screw jaw of the filter to be adjusted is smaller than M3 size and in case it is a straight jaw, then the robot arm cannot directly take it and it distorts the jaw structure of the adjusting screw of the filter during adjustment process. In order not to distort this structure, an apparatus is used.
- In case the filters to be adjusted are in 3 planes, it is not possible to work with said method with apparatus.
- The assembly of said apparatuses leads to additional labor time.

As a result due to the abovementioned disadvantages and the insufficiency of the current solutions regarding the subject matter, a development is required to be made in the relevant technical field.

### Purpose of the Invention

The invention aims to solve the abovementioned disadvantages by being inspired from the current conditions.

The main purpose of the invention is to eliminate the requirement of additional apparatus for both human intervention and rotation of the adjusting screws from the beginning of the characterization adjustment to the end.

Another purpose of the invention is to save from the material cost and apparatus assembly labor by eliminating the requirement of additional apparatus.

Another purpose of the invention is to provide ease of operation for the filter screws at very small levels by eliminating the requirement of additional apparatus.

Another purpose of the invention is to provide performing the process without considering the work plane.

In order to fulfill the abovementioned purposes, the invention is a configurable automatic test infrastructure adapted for characterization adjustment of filters having at least one screw for tuning the filter wherein each screw has a slot, the configurable automatic test infrastructure comprises a tip for rotating the at least one screw on the filter an image scanner comprising a light curtain; a robot arm having a work field; a linear guideway configured to bring the filter to the work field and away from the work field; wherein the automatic test infrastructure is configured to perform the following steps
- carrying the filter by the robot arm onto the linear guideway in the work field;
- moving the filter by the linear guide way through the light curtain such that the image scanner scans the at least one screw of the filter;
- determining by the image scanner the respective angle for each of the at least one screw;
- carrying the filter by the linear guide way to the work field;
- approximating by the robot arm the tip to a respective screw of the at least one screw in accordance with the respective angle determined by the image scanner;
- mounting by the robot arm the tip in the respective slot;
- transmitting rotational motion to the respective screws by means of the tip.

The structural and characteristic features of the present invention will be understood clearly by the following drawings and the detailed description made with reference to these drawings and therefore the evaluation shall be made by taking these figures and the detailed description into consideration.

### Figures Clarifying the Invention

**Figure 1** is a top perspective view of the filter and the interface connections in the state of the art.
**Figure 2** is an illustrative view of the filter whose characterization adjustment will be made.

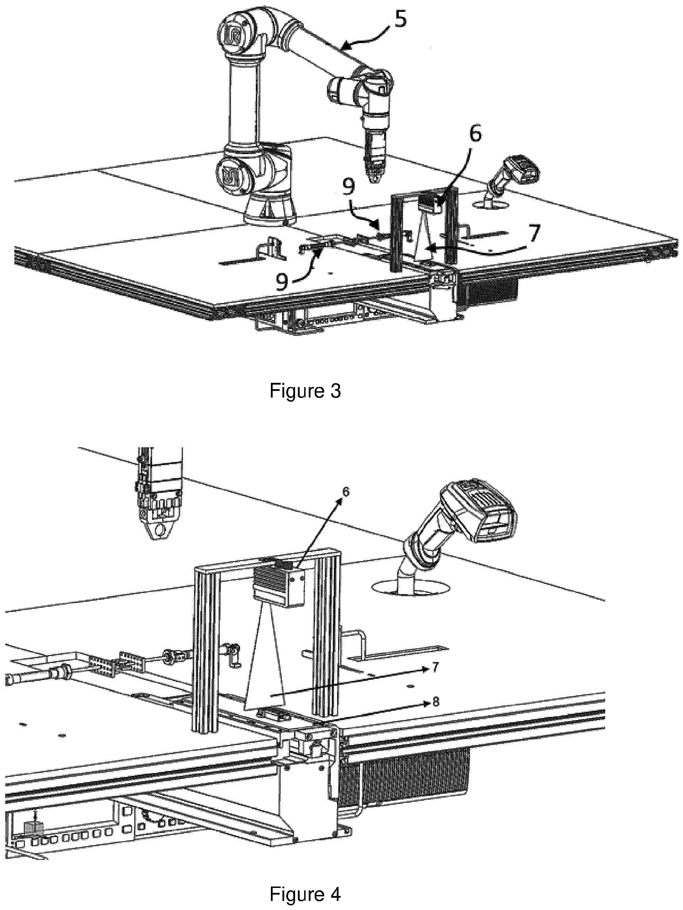

**Figure 3** is an illustrative view of the configurable test infrastructure.
**Figure 4** is an illustrative view of the linear guide way and the image scanning system.

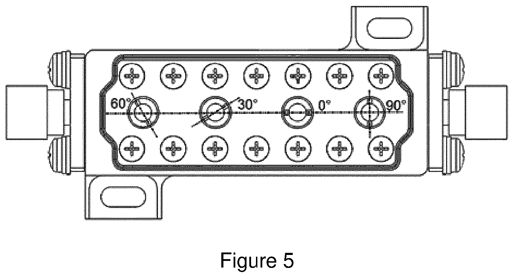

**Figure 5** is the view of the sample angles detected by the image scanner.

### Description of the Part References

**A.** Filter
**1.** Screw
**2.** Tip
**3.** Slot
**4.** Sub-assembly apparatus
**5.** Robot arm
**6.** Image scanner
**7.** Light curtain
**8.** Linear guideway
**9.** Piston

### Detailed Description of the Invention

In this detailed description, the preferred embodiments of the inventive a configurable automatic test infrastructure is described by means of examples only for clarifying the subject matter.

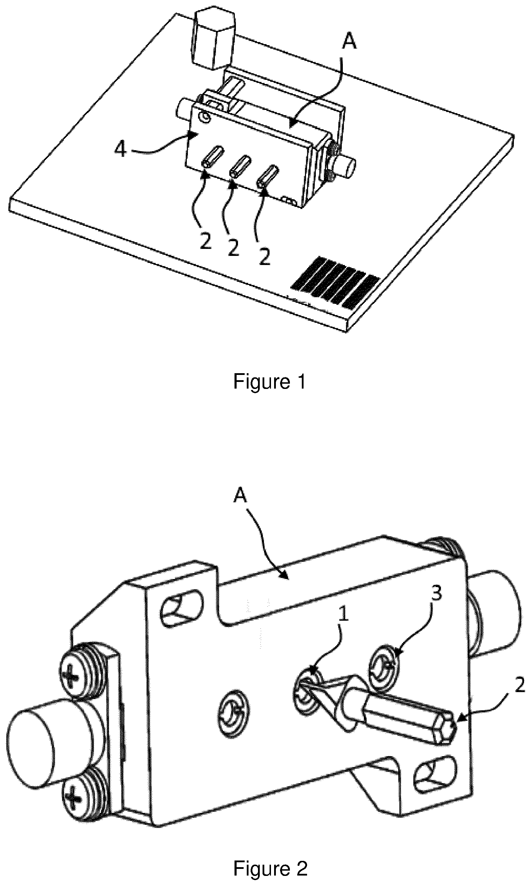

Characterization in the automatic test infrastructure is done by rotating the screws (1) on the filter (A) seen in Figure 2 by the robot arm (5). The robot arm (5) uses an additional tip (2) to rotate the screws (1) on the filter (A). The additional tip (2) transmits the rotational motion from the robot arm (5) to the screw (1) on the filter (A) by fitting the screws (1) into the slots (3) on the filter (1). Therefore, characterization process is performed by means of enabling the required rotation.

The automatic test infrastructure accesses universal RF connectors and automatically connects to them such that the frequency characteristics can be measured and used for tuning without any human intervention.

In the current structures seen in Figure 1, a sub-assembly apparatus (4) is used to completely assemble the screw (1) on the filter (A) by means of the additional tip (2). The purpose of this sub-assembly apparatus (4) is to fully assemble the additional tip (2) to the screw (1) slot (3) (the first assembly shall be performed by the technical personnel), to keep the assembly surfaces in a stable manner and to enable the relevant screw slot (3) not to deform. In the present method, the robotic arm (5) cannot be determined the angle to approach because it does not know the position of the slot (3) and this angle is transmitted to the robot arm (5) with the help of the sub-assembly apparatus (4) in a universal manner. In case the additional tip (2) is rotated without being fully fitted into the slot (3) of the screw (1) to be rotated, deformation occurs in the slot (3) and it cannot be used in the following processes.

In the inventive test infrastructure, since the locations of the slots (3) will be known by the system with the help of the image processing technology, the approximation of the robot arm (5) and the tip (2) will be able to perform the assembly into the slot (3). After the location of the screw (1) slot (3) is determined, the robot arm (5) will be rotated such that the additional tip (2) will fit into the slot (3).

### Working Principle of the Image Processing Method

The RF filter (A) to be tested is carried by the robot arm (5) onto the linear guideway (8) in the system. The linear guideway (8) moves the filter (A) in an axis and passes through the light curtain (7) of the image scanner (6). Thus the images of the screws (1) on the filter (A) are scanned and recorded. In case there are adjusting screws (1) on different planes of the filter (A), the scanning process is repeated for different planes. The robot arm (5) rotates the filter (A) in the relevant plane, the screws (1) in this plane are recorded by the image scanner (6) (Figure-4).

The angles of the adjusting screws (1) on the filter (A) to be determined whose images are taken are determined by the image processing package program (ready image processing program) included within the image scanner (6) (Figure-4). After the instant angle of each screw (1) is determined, the robot arm (5) can be able to mount the additional tip (2) to the slot (3) of the screws (1) on the filter according to this angle by the command it received from the image scanner (6) and can transmit the rotational motion on the axis to these screws (1) by means of the tip (2).

The filter (A) which is carried to the work field by the linear guideway (8) is fixed to the work field by the pistons (9). The robot arm (5) completes the characterization process by making adjustments after the measurements and then the pistons (9) releases the filer (A) such that the robot arm (5) receives thereof (Figure-3).

## Claims

1. A configurable automatic test infrastructure adapted for characterization adjustment of filters (A) having at least one screw (1) for tuning the filter wherein each screw has a slot (3),
the configurable automatic test infrastructure comprises a tip (2) for rotating the at least one screw (1) on the filter (A);
an image scanner (6) comprising a light curtain (7);
a robot arm (5) having a work field;
a linear guideway (8) configured to bring the filter (A) to the work field and away from the work field;
wherein the automatic test infrastructure is configured to perform the following steps
• carrying the filter by the robot arm (5) onto the linear guideway in the work field;
• moving the filter by the linear guide way through the light curtain such that the image scanner scans the at least one screw of the filter;
• determining by the image scanner the respective angle for each of the at least one screw;
• carrying the filter by the linear guide way to the work field;
• approximating by the robot arm the tip to a respective screw of the at least one screw in accordance with the respective angle determined by the image scanner;
• mounting by the robot arm the tip in the respective slot;
• transmitting rotational motion to the respective screw by means of the tip.

2. The configurable automatic test infrastructure of claim 1, further comprising a piston (9) configured to fix the filter (A) carried to the work field and to release the filter (A) after the characterization adjustment is completed.

## Patentansprüche

1. Konfigurierbare automatische Testinfrastruktur, die für Kennzeichnungsanpassung von Filtern (A) ausgelegt ist und zumindest eine Schraube (1) zum Einstellen des Filters aufweist, wobei jede Schraube einen Schlitz (3) aufweist,
wobei die konfigurierbare automatische Testinfrastruktur Folgendes umfasst:
eine Spitze (2) zum Drehen der zumindest einen Schraube (1) auf dem Filter (A);
einen Bildscanner (6), der einen Lichtvorhang (7) umfasst;
einen Roboterarm (5), der ein Arbeitsfeld aufweist;
eine lineare Führungsbahn (8), die konfiguriert ist, um den Filter (A) zu dem Arbeitsfeld und weg von dem Arbeitsfeld zu bringen;
wobei die automatische Testinfrastruktur konfiguriert ist, um die folgenden Schritte durchzuführen:
• Tragen des Filters durch den Roboterarm (5) auf die lineare Führungsbahn in dem Arbeitsfeld;
• Bewegen des Filters durch die lineare Führungsbahn durch den Lichtvorhang, sodass der Bildscanner die zumindest eine Schraube des Filters scannt;
• Bestimmen, durch den Bildscanner, des jeweiligen Winkels für jede von der zumindest einen Schraube;
• Tragen des Filters durch die lineare Führungsbahn zu dem Arbeitsfeld;
• Annähern, durch den Roboterarm, der Spitze an eine jeweilige Schraube von der zumindest einen Schraube gemäß dem jeweiligen Winkel, der durch den Bildscanner bestimmt wird;
• Montieren, durch den Roboterarm, der Spitze in dem jeweiligen Schlitz;
• Übertragen von Drehbewegung auf die jeweilige Schraube mittels der Spitze.

2. Konfigurierbare automatische Testinfrastruktur nach Anspruch 1, ferner umfassend einen Kolben (9), der konfiguriert ist, um den Filter (A), der zu dem Arbeitsfeld getragen wird, zu befestigen und um den Filter (A) freizugeben, nachdem die Kennzeichnungsanpassung abgeschlossen ist.

## Revendications

1. Infrastructure de test automatique configurable adaptée pour l'ajustement de caractérisation de filtres (A) ayant au moins une vis (1) afin d'accorder le filtre dans laquelle chaque vis a une fente (3),
l'infrastructure de test automatique configurable comprend une pointe (2) pour faire tourner l'au moins une vis (1) sur le filtre (A) ;
un scanner d'images (6) comprenant un rideau de lumière (7) ;
un bras robotisé (5) ayant un champ de travail ;
une voie de guidage linéaire (8) configurée pour amener le filtre (A) vers le champ de travail et l'éloigner du champ de travail ;
dans lequel l'infrastructure de test automatique est configurée pour effectuer les étapes suivantes
• transport du filtre par le bras robotisé (5) sur la voie de guidage linéaire dans le champ de travail ;
• déplacement du filtre par la voie de guidage linéaire à travers le rideau de lumière de sorte que le scanner d'image balaye l'au moins une vis du filtre ;
• détermination par le scanner d'image de l'angle respectif pour chacune des au moins une vis ;
• transport du filtre par la voie de guidage linéaire jusqu'au champ de travail ;
• rapprochement par le bras robotisé de la pointe jusqu'à une vis respective de l'au moins une vis conformément à l'angle respectif déterminé par le scanner d'image ;
• montage par le bras robotisé de la pointe dans la fente respective ;
• transmission d'un mouvement de rotation à la vis respective au moyen de la pointe.

2. Infrastructure de test automatique configurable selon la revendication 1, comprenant en outre un piston (9) configuré pour fixer le filtre (A) transporté sur le champ de travail et pour libérer le filtre (A) une fois que l'ajustement de caractérisation est terminé.
